# EUROPEAN PATENT APPLICATION

(11) **EP 4 789 915 A1**
(43) Date of publication of application: **12.08.2026**
(21) Application number: 25156249.2
(22) Date of filing: 06.02.2025
(51) Int. Cl.: B60P 1/52

(54) **CARGO SPACE FLOOR SYSTEM**

(71) Applicant: Modul-System HH AB, 431 49 Mölndal (SE); ALWAYSE ENGINEERING LIMITED, Birmingham B6 4NF (GB)
(72) Inventor: CARLSSON, Anders, 431 49 MÖLNDAL (SE); UMNEY, Claire, Leamington Spa, CV32 7TN (GB)
(74) Representative: AWA Sweden AB

(57) **Abstract**

The disclosure relates to a road vehicle comprising a floor system for handling loads in a cargo space of the road vehicle, the floor system comprising: a plurality of floor modules arranged on an inner floor of the road vehicle, each floor module comprising a plurality of roll or ball transfer units, each roll or ball transfer unit comprising a rotatable body, each rotatable body defining a respective load contact interface, and wherein each floor module is configured to be set in a deactivated state and an activated state, wherein in the activated state, at least some of the respective load contact interfaces of the rotatable bodies are configured to engage with a load arranged on the floor module for facilitating displacement of the load; a detection arrangement configured to acquire data pertaining to the load; and a processing unit communicatively connected to each floor module of the plurality of floor modules and the detection arrangement, the processing unit being configured to: receive the data pertaining to the load and determine at least one characteristic of the load based on said data; and selectively set each floor module of the plurality of floor modules in the deactivated state or the activated state.

## Description

### Field of the disclosure

The disclosure relates to systems of floor modules in cargo spaces of road vehicles. The disclosure also relates to methods for operating such systems.

### Technical Background

Loading and unloading cargo spaces of road vehicles, in particular trucks, is not only time consuming, but physically demanding. Often, the heavy-lifting may be alleviated by hand trolleys. However, access to hand trolleys is often limited, resulting in reduced capacity for loading/unloading. Further, hand trolleys may be difficult to maneuver in the cargo space, and use thereof may still involve challenging physical operations, such as pivoting the load.

Hence, there is a need for a solution which improves efficiency and safety, while reducing the physical demand, of the loading and unloading processes

### Summary of the disclosure

It is an object of the present disclosure to alleviate at least some of the aforementioned issues by providing a road vehicle comprising a floor system in the cargo space thereof, which system facilitates displacement of a loads. This and other objects which will be evident from the following description is achieved by a road vehicle having the features defined in claim 1.

A road vehicle comprising a floor system for handling loads in a cargo space of the road vehicle, the floor system comprising: a plurality of floor modules arranged on an inner floor of the road vehicle, each floor module comprising a plurality of roll or ball transfer units, each roll or ball transfer unit comprising a rotatable body, each rotatable body defining a respective load contact interface, and wherein each floor module is configured to be set in a deactivated state and an activated state, wherein in the activated state, at least some of the respective load contact interfaces of the rotatable bodies are configured to engage with a load arranged on the floor module for facilitating displacement of the load; a detection arrangement configured to acquire data pertaining to the load; and a processing unit communicatively connected to each floor module of the plurality of floor modules and the detection arrangement, the processing unit being configured to: receive the data pertaining to the load and determine at least one characteristic of the load based on said data; and selectively set each floor module of the plurality of floor modules in the deactivated state or the activated state.

Hereby, a system with floor modules which may selectively be brought to a state in which a load is arranged on roll or ball transfer units for easier displacement thereof, is provided. Thus, loads may easily be displaced in the cargo space, thereby facilitating optimal packing of the cargo. A system with improved efficiency and safety is consequently provided.

As is known in the art, a *"roll transfer unit"* or a *"ball transfer unit"* is an element which comprises a rotatable body in the form of a roll or a ball and which is configured for facilitation of transportation of items. A roll transfer unit generally provides for transportation along one axis, whereas a ball transfer unit generally provides for omnidirectional transportation.

Within the context of the present disclosure, the term *"load*" is to be understood as any item, object, or cargo that may be transported in a cargo space of a road vehicle. That is, a load may be a package, produce, equipment, such as a power tool, furniture, etc.

Within the context of the present application, the term "*load contact interface*" is to be understood as a portion or point of the rotatable body which is, at any given instance, contacting a load or is intended to contact a load. In other words, since the rotatable body during facilitation of transportation of a load rotates, the portion which is in contact with the load changes. Consequently, a portion or point of the rotatably body which constitutes the load contact interface changes.

It is to be understood that a road vehicle may be any type of vehicle meant for use on roads, such as an automobile, a service vehicle, a light truck, a heavy truck, or a trailer configured to be attached to a truck. Consequently, a cargo space is to be understood as any space of such vehicle which is designed to carry cargo, such as the box of or a trailer of a heavy truck. A cargo space of a road vehicle may also be referred to as a back space of a road vehicle. An inner floor of the road vehicle is a floor which defines the cargo space, or back space, of the road vehicle.

A floor module according to the present disclosure may have any shape or dimension. For example, the floor module may be rectangular, quadratic, triangular or polygonal. The floor module may be configured such that a set of floor modules may tesselate an inner floor of the road vehicle. For example, a floor module may be rectangular with the dimensions 1x1.5 meters. It is to be understood that a floor module may be assembled from at least two, or a plurality of, sub-modules. For example, a floor module may comprise two sub-modules which are connected to each other.

A processing unit may include any number of hardware components for conducting data or signal processing or for executing functions stored in a memory. It is to be understood that the processing unit may be configured to selectively set any one floor module of the plurality of floor modules in the activated state or the deactivated state based on any one determined characteristic of the load. For example, the processing unit may set a floor module in the deactivated state if a tilt of such floor module is above a predetermined threshold value. As another example, the processing unit may set a floor module in the activated state if a presence of a load is detected on such floor module. Additionally or alternatively, the processing unit may selectively set any one floor module based on user input. Generally, the system of the present disclosure may further comprise or may be configured to be used with a user device, such as a hand-held device, for example a mobile phone or a tablet. Hereby, a user, or an operator, may be provided information regarding characteristics of a load or loads stored in the cargo space. Moreover, the user or operator may provide input to the processing unit in order to set any one of the floor modules of the system in the activated state or the deactivated state. It is further to be understood that the processing unit may condition the activation or deactivation of any one floor module based on any determined characteristic. For example, a user or operator may be prohibited to activate a floor module if a weight of a load exceeds a predetermined threshold value and/or if a tilt of the floor module exceeds a predetermined threshold value.

A characteristic of the load may be any property, aspect or attribute of the load, such as dimension, shape, color, location, presence, speed, tilt, weight etc. Consequently, data pertaining to the load may comprise any information related to any property, aspect or attribute of the load. That is, data pertaining to the load is data pertaining to at least one characteristic of the load, the at least one characteristic subsequently being, after processing the acquired data, determined by the processing unit. To this end, the detection arrangement may comprise any number of detection units and any type of detection units.

For example, the detection arrangement may comprise an image sensor configured to acquire image data of the cargo space and to provide the image data to the processing unit, wherein the processing unit is configured to determine a presence of a load in said cargo space.

The image sensor may, e.g., be arranged on a wall of the cargo space, or a ceiling of the cargo space. An image sensor may for example be a camera, or an IR sensor. A presence of the load may include a location of the load.

Additionally or alternatively, the detection arrangement may comprise at least one weight sensor, the at least one weight sensor being configured to acquire weight data of a load in said cargo space.

A weight sensor may be provided in a variety of ways. For example, a weight sensor may be a pressure sensor arranged inside a floor module.

The at least one weight sensor may comprise a plurality of weight sensors, wherein each floor module may be provided with a respective weight sensor of the plurality of weight sensors.

The detection arrangement may comprise at least one tilt sensor, wherein the at least one tilt sensor is configured to acquire inclination data of at least one floor module, and wherein the processing unit is configured to determine a tilt of the load.

A tilt sensor may also be referred to as an inclinometer, as is established in the art. A tilt sensor may, e.g., be provided in any one of the floor modules. The detection arrangement may comprise more than one tilt sensor. However, it is to be understood that, given that the inner floor is level, one tilt sensor may be enough to determine the respective tilt of each of the floor modules of the plurality of floor modules.

The detection arrangement may comprise a speed sensor configured to acquire speed data of the road vehicle.

A speed sensor of the detection arrangement may, e.g., be any speed sensor which often is provided in a road vehicle. To this end, the processing unit may be configured to be communicatively connected to a vehicle mainframe for accessing speed data. A speed sensor may cooperate with any other sensor in the road vehicle so as to acquire velocity data.

The plurality of floor modules may be arranged on the inner floor in a variety of ways. Consequently, the plurality of floor modules may be arranged in a variety of patterns on the inner floor. For example, each floor module of the plurality of floor modules have at least two neighboring floor modules.

The plurality of floor modules may be arranged in an O-shaped pattern. That is, the plurality of floor modules may be arranged in a continuous pattern wherein each module having at least one neighboring floor module, wherein an inner portion of the pattern is empty. In other words, the plurality of floor modules are provided with a dead-zone, i.e. a zone which is not provided with a floor module having the functionality of being bringable to an activated state, the dead-zone being arranged substantially in the middle of the pattern. For example, a mid-portion of the inner floor of the road vehicle may be open to the cargo space, such that an upper surface of the mid-portion is facing the cargo space. Alternatively, the mid-portion may be provided with a regular floor tile, i.e. a floor tile not having the functionality of being bringable to an activated state in which displacement of a load is facilitated.

Hereby, the mid-portion may act as a friction patch obstructing the path of any load that may slide over the inner flow in case the plurality of floor modules is activated and, e.g., the inner floor is tilted.

The inner floor may comprise a first zone and a second zone, wherein the first zone is arranged adjacent a cargo door of the road vehicle, and wherein the plurality of floor modules may be arranged in a pattern in which a floor module coverage in the first zone is lower than a floor module coverage in said second zone.

Within the context of the present disclosure, the term *"floor module coverage"* is to be understood as a percentage of the area of a given zone of the inner floor which is covered by floor module. For example, the floor module coverage of the first zone may be about 90%. That is, about 90% of the area of the first zone may be covered by floor module. In other words, the first zone may be provided with one or more dead-zones, i.e. a zone which is not provided with a floor module having the functionality of being bringable to an activated state. Alternatively, the floor module coverage of the first zone may be about 80%, or about 70%, or about 60%, or about 50%, or about 40%, or about 30%. Additionally, the floor module coverage of the second zone may be about 100%, or about 90%.

Hereby, a load being displaced from the second zone to the first zone is at a reduced risk of sliding out of the cargo space, since at least a portion of the first zone may act as a friction patch.

That the first zone is arranged adjacent a cargo door of the road vehicle is to be understood that the first zone is neighboring the cargo door, or next to the cargo door, or adjoining a cargo door area of the road vehicle. In other words, the first zone is arranged closer to the cargo door than the second zone.

A floor module may be configured such that it may be brought between an activated state and an deactivated state in a variety of ways. For example, for each floor module, the load contact interfaces are arranged in a first plane, and wherein each floor module further comprises: a floor unit, wherein the floor unit forms a surface facing said cargo space of the road vehicle, the surface extending in a second plane; wherein the floor unit is provided with openings for allowing the plurality of roll or ball transfer units to be movable relative the floor unit between a first position corresponding to the deactivated state of the floor module and a second position corresponding to the activated state of the floor module, wherein in the first position, the first plane is arranged relative to the second plane such that the surface of the floor unit is configured to support a load arranged on the floor module, and wherein in the second position, the first plane is arranged relative to the second plane such that at least some of the respective load contact interfaces of the rotatable bodies are configured to engage with a load arranged on the floor module for facilitating displacement of the load.

Alternatively, each roll or ball transfer unit may be electronically activatable. That is, in the deactivated state of a floor module, each roll or ball transfer unit, or at least some of the roll or ball transfer units, may be hindered from rotating while still supporting the load, wherein in the activated state of the floor module, each roll or ball transfer unit, or at least some of the roll or ball transfer units, may be permitted to rotate so as to facilitate displacement of the load.

The floor module may further comprise at least one actuator configured to move the plurality of roll or ball transfer unit between the first position and the second position. Consequently, setting a floor module in a deactivated state or activated state may comprise controlling the at least one actuator. Hence, the at least one actuator may be communicatively connected to the processing unit.

Controlling the at least one actuator may, for example, further comprise modifying resistance of the actuator, or setting criteria for activation of the actuator.

Further, the at least one actuator may function as a weight sensor. For example, the power, or force, or discplacement of the actuator may be correlated with a weight of a load which is arranged on the floor module, and which load is lifted by the roll or ball transfer units when moving from the first position to the second position.

If the detection arrangement comprises a tilt sensor, such tilt sensor may, e.g., be configured to sense an angular deviation of the respective first plane and/or the respective second plane in relation to a respective predetermined initial angular state of the first plane and/or the second plane.

According to a second aspect of the present disclosure, a method for operating a floor system of a road vehicle according to the first aspect of the present disclosure is provided, the method comprising: acquiring, by the detection arrangement, data pertaining to a load; receiving, by the processing unit, the acquired data; determining, by the processing unit, at least one characteristic of the load based on the acquired data; and selectively setting, by the processing unit, at least one floor module of the plurality of floor modules in the deactivated state or the activated state.

Any technical effect, benefit, further feature or variant discussed in relation to the first aspect of the present disclosure may be applicable to the second aspect of the present disclosure.

The detection arrangement may comprise any number of detection units and any type of detection units.

The detection arrangement may comprise an image sensor, and wherein: acquiring data pertaining to a load further comprises acquiring, by the image sensor, image data of the load; determining at least one characteristic of the load may comprise determining a presence and/or location of the load in the cargo space of the vehicle based on said image data; and selectively setting at least one floor module may optionally comprise selectively setting a floor module closest to the location of the load in the deactivated state or the activated state.

The floor module which is closest to the location of the load may for example be the floor module, or one of the floor modules, on which the load is arranged.

The detection arrangement may comprise at least one of weight sensor arranged in a respective one floor module of the plurality of floor modules, and wherein: acquiring data pertaining to a load further may further comprise acquiring, by the at least one weight sensor, weight data of a load arranged on said one floor module; and determining at least one characteristic of the load may comprise determining a weight of the load arranged on said one floor module.

The detection arrangement may comprise at least one tilt sensor, and wherein: acquiring data pertaining to a load further may comprise acquiring, by the at least one tilt sensor, inclination data of at least one floor module; and determining at least one characteristic of the load comprises determining a tilt of the load.

Determining a tilt of the load may comprise determining, for the at least one floor module, an angular deviation of the respective first plane and/or second plane in relation to a respective predetermined initial state of the first plane and/or the second plane.

It is to be understood that the processing unit may selectively set any one floor module of the plurality of floor modules in the activated state or the deactivated state based on any one determined characteristic of the load.

For example, the processing unit may set a floor module in the deactivated state if a tilt of such floor module is above a predetermined threshold value. As another example, the processing unit may set a floor module in the activated state if a presence of a load is detected on such floor module. That is, selectively setting at least one floor module may further comprises: if the weight of the load is below a predetermined threshold value or if the angular deviation of the first plane and/or the second plane is below a predetermined threshold value, setting, by the processing unit, the at least one floor module in the activated state.

It may be noted that the use of first, second, third, fourth, fifth, etc. are mainly to be seen as labels facilitating reading and that it does not necessarily mean that there need to be all the intervening numbers of portions present. It may e.g., be noted that it is contemplated to have a design where there is a first portion, a second portion, a third portion and a fifth portion, with the fourth portion being omitted. However, to facilitate reading, we have consistently used the numbering first, second, third, fourth, etc., as labels, and in a sense based on an embodiment including all conceivable portions.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise.

### Brief description of the drawings

The disclosure will by way of example be described in more detail with reference to the appended schematic drawings, which shows exemplary variants of the disclosure, wherein:
Fig. 1 is a schematic perspective view of a road vehicle comprising a floor system for handling loads in a cargo space thereof;
Fig. 2 is a schematic view of an exemplary floor module of a floor system;
Fig. 3 is perspective view of a plurality of floor modules arranged in an O-shaped pattern;
Fig. 4 is a perspective view of a plurality of floor modules arranged in a pattern wherein a first zone has a lower floor module coverage than a second zone; and
Fig. 5 is a schematic flow chart illustrating a method for operating a floor system.

### Detailed description of embodiments

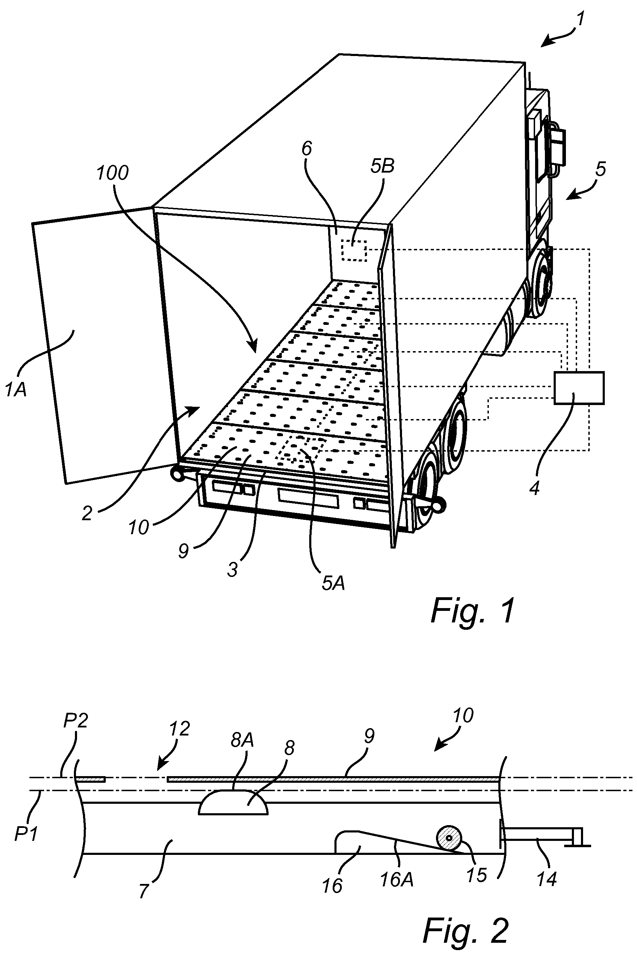

With reference to Figs. 1-4, a road vehicle 1 and a floor system 100 comprising a plurality of floor modules 10 are disclosed.

In Fig. 1, a road vehicle 1 comprising a floor system 100 for handling loads is shown. The floor system comprises a plurality of floor modules 10. The floor system 100 is arranged in a cargo space 2 of the road vehicle 1. Here, the road vehicle 1 is a truck comprising a cargo door 1A. However, it is to be understood that a road vehicle may be any type of vehicle meant for use on roads, such as an automobile, a service vehicle, a light truck, a heavy truck, or a trailer configured to be attached to a truck.

The cargo space 2 of the road vehicle 1 is partially defined by an inner floor 3. The floor system 100 is arranged on the inner floor 3. Here, the floor system 100 tessellates, that is substantially completely covers, the inner floor 3. However, a floor system 100 may comprise any number of floor modules 10, and the floor modules 10 may have any shape or dimension suitable for the cargo space 2. Consequently, the floor module coverage of the inner floor 3 may be varied. A floor module 10 may be rectangular, quadratic, triangular or polygonal. In Fig. 1, each floor module 10 is rectangular. It is to be understood that a floor module 10 may be assembled from at least two, or a plurality of, sub-modules. For example, a floor module 10 may comprise two sub-modules which are connected to each other.

The floor system 100 further comprises a processing unit 4. A processing unit may include any number of hardware components for conducting data or signal processing or for executing functions stored in a memory. The processing unit 4 is communicatively connected to each floor module 10. The processing unit 4 is configured to selectively set each floor module in an deactivated state or an activated state. In the activated state, a floor module 10 facilitates displacement of a load arranged in the cargo space 3. Consequently, when in the deactivated state, a load is supported by the floor module in a way such that it exerts resistance to displacement of the load.

The floor system 100 further comprises a detector arrangement 5. The detection arrangement 5 is communicatively connected to the processing unit 4. Here, the detector arrangement 5 is illustrated as comprising two detection units 5A, 5B. Further, a first detection unit 5A is shown as being arranged in, or under, a floor module 10. A second detection unit 5B is shown as being arranged on, in or behind a back wall 6 of the road vehicle 1. This illustrates the fact that a detection unit 5A, 5B may be arranged both interior and exterior to a floor module 10, depending on type or functionality of the detection unit 5A, 5B. As such, a detection unit 5A, 5B may be any type of detection unit or sensor. For example, a detection unit 5A, 5B may be an image sensor configured to acquire image data of the cargo space 3 and to provide the image data to the processing unit 4, wherein the processing unit 4 is configured to determine a presence of a load in said cargo space 3. An image sensor may for example be a camera, or an IR sensor. A presence of the load may include a location of the load. An image sensor is an example of a detection unit suitable for arrangement on or in back wall 6, or any other wall, or a ceiling, of the road vehicle 1.

A detection unit 5A, 5B may be a weight sensor configured to acquire weight data of a load. It is to be understood that weight data may be used to determine the mass of a load. A weight sensor may be provided in a variety of ways. For example, a weight sensor may be a pressure sensor arranged inside a floor module 10. The system may comprise a plurality of weight sensors, wherein each floor module 10 is provided with a respective weight sensor.

A detection unit 5A, 5B may be a tilt sensor configured to acquire inclination data of at least one floor module 10. A tilt sensor may also be referred to as an inclinometer, as is established in the art. A tilt sensor may, e.g., be provided in any one of the floor modules 10. The detection arrangement 5 may comprise more than one tilt sensor. However, it is to be understood that, given that the inner floor is level, one tilt sensor may be enough to determine the respective tilt of each floor module 10.

A detection unit 5A, 5B may be a speed sensor configured to acquire speed data of the road vehicle 1. A speed sensor may, e.g., be any speed sensor which often is provided in a road vehicle. To this end, the processing unit 4 may be configured to be communicatively connected to a vehicle mainframe for accessing speed data. A speed sensor may cooperate with any other sensor in the road vehicle so as to acquire velocity data.

An exemplary floor module 10 is illustrated in Fig. 2. The floor module 10 is shown from a side view. The floor module 10 comprises a beam 7 supporting roll or ball transfer unit 8. Here, only one roll or ball transfer unit 8 is shown. However, as is illustrated in Fig. 1, a floor module may comprise a plurality of roll or ball transfer units 8. For example, a plurality of roll or ball transfer units 8 may be discretely arranged along a longitudinal axis of the beam 7. The roll or ball transfer unit comprises a rotatable body, wherein the rotatable body defines a load contact interface 8A. The load contact interface 8A is arranged in a first plane P1.

The floor module 10 further comprises a floor unit 9. Here, the floor unit 9 is extending parallel with the longitudinal axis of the beam 7. Further, the floor unit 9 forms a surface which faces the cargo space 2. The surface is extending in a second plane P2. As is seen in Fig. 2, the first plane is arranged below the second plane. This corresponds to a deactivated state of the floor module 10, where a load arranged thereon is supported by the floor unit 9. Hereby, the floor unit 9 may act as a friction surface for providing resistance to displacement of the load.

The beam 7 is movable relative the floor unit 9. Here, the beam 7 is configured to move while the floor unit 9 is stationary. However, it is to be understood that in other exemplar variants of the floor module 10, the floor unit 9 may be movable while the beam 7 is stationary.

In Fig. 2, the beam 7 is in a first position corresponding to a deactivated state of the floor module 10. Here, it can be seen that the roll or ball transfer unit 8 is arranged beneath the floor unit 9. That is, the ball transfer unit 8 will not engage and/or support a load arranged on the module 10. The beam 7 is movable from the first position to a second position corresponding to an activated state of the floor module 10. When bringing the beam 7 to the second position, the roll or ball transfer unit 8 traverses a through-hole 12 in the floor unit 9, such that the load contact interface 8A is arranged above the floor unit 9, that is, the first plane P1 is arranged above the second plane P2. The beam 7 may be moved to the second position in a variety of ways. Here, the beam 7 is connected to an actuator 14. The actuator 14 may for example be a linear actuator. The actuator 14 may be communicatively connected to the processing unit 4. Further, the processing unit 4 may be configured to control the actuator 14. The actuator 14 is configured to apply a force on the beam 7 so as to move the beam 7 along a longitudinal axis of the beam 7. Hereby, a roller 15 connected to the beam 7 may engage with an elevation element 16. Here, the elevation element 16 is provided in the form of a ramp. Thus, the roller 15 may roll along an inclined surface 16A of the ramp 16 such that the beam 7 is simultaneously moved along and perpendicular to the longitudinal axis thereof. Hereby, the roll or ball transfer unit 8 may traverse the through-hole 12 such that the load contact interface 8A may be arranged above the floor unit 9.

Here, the inclined surface 16A is linear. However, it may have a nonlinear shape.

It is to be understood that the beam 7 may be provided with a plurality of roll or ball transfer units 8, and as such, the floor unit 9 may be provided with a plurality of through-holes 12. Furthermore, the floor module 10 may comprise one or more covers, each cover being connected the beam 7 and configured to cover a respective through-hole 12 in the deactivated state of the floor module 10. Furthermore, each cover may be configured to allow a respective load contact interface 8A to traverse the through-hole 12 when the beam 7 is moving between the first position and the second position.

It is to be understood that Fig. 2 is merely an example of how an activatable floor module 10 may be provided. Alternatively, the roll or ball transfer unit 8 may be held constantly above the floor unit 9 and wherein the roll or ball transfer unit 8 is electronically activatable. That is, in the deactivated state of the floor module 10, the roll or ball transfer unit 8 may be hindered from rotating while still supporting the load, wherein in the activated state of the floor module 10, the roll or ball transfer unit 8 may be permitted to rotate so as to facilitate displacement of the load.

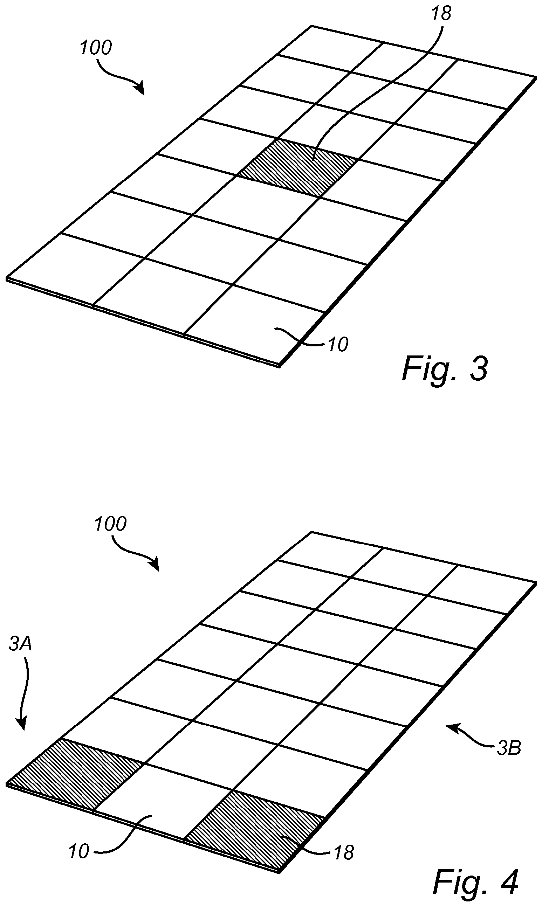

In Fig. 3, a specific pattern of floor modules 10 is shown. Here, each floor module 10 has at least two neighboring floor modules 10. Further, the plurality of floor modules 10 are arranged in an O-shaped pattern. That is, the floor modules 10 are arranged in a continuous pattern, wherein an inner portion of the pattern is empty. In other words, the pattern comprises a dead-zone 18 substantially in the middle thereo. A dead-zone 18 is thereby a zone which is not provided with a floor module 10 having the functionality of being bringable to an activated state. The dead-zone 18 may, for example, correspond to a mid-portion of the inner floor 3 of the road vehicle 1 which is open to the cargo space 2, such that an upper surface of the mid-portion is facing the cargo space 2. Alternatively, the dead-zone 18 may be provided in the form of a a regular floor tile, i.e. a floor tile not having the functionality of being bringable to an activated state in which displacement of a load is facilitated. Hereby, the dead-zone 18 may act as a friction patch obstructing the path of any load that may slide over the inner flow in case the plurality of floor modules 10 is activated and, e.g., the inner floor is tilted.

In Fig. 4, an alternative pattern is shown. Here, the inner floor 3 comprises a first zone 3A and a second zone 3B. The first zone 3A may, e.g., be arranged adjacent a cargo door of the road vehicle 1. Hereby, the first zone 3A may also be referred to as a cargo door zone. Consequently, the second zone 3B may be arranged adjacent a back wall of the cargo space 2 of the road vehicle 2. In other words, the first zone 3A is arranged closer to the cargo door than the second zone 3B. The second zone 3B may, e.g., be consituted by the portion of the inner floor 3 that is not comprised in the first zone 3A. That is, the union of the first zone 3A and the second zone 3B may form the entire inner floor 3. Alternatively, the inner floor 3 may be divided into further zones.

In Fig. 4, the plurality of floor modules 10 are further arranged in a pattern in which a floor module coverage in the first zone 3A is lower than a floor module coverage in the second zone 3B. That is, a percentage of the area of a the first zone 3A of the inner floor 3 which is covered by floor module 10 is smaller than that of the second zone 3B. Here, the first zone 3A is constituted by one floor module 10 and two dead-zones 18. That is, a floor module coverage of the first zone is about one third, or about 33%. Alternatively, the floor module coverage of the first zone may be about 90%, or about 80%, or about 70%, or about 60%, or about 50%, or about 40%, or about 30%. Additionally, the floor module coverage of the second zone may be about 100%, or about 90%.

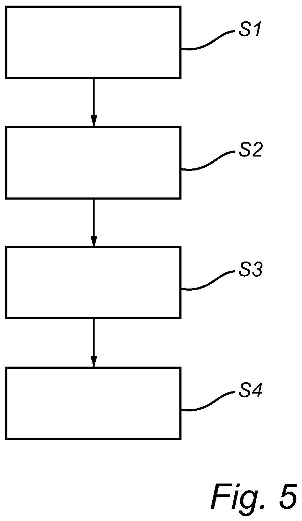

In Fig. 5, a flow chart illustrating a method for operating a floor system 100 of a road vehicle 1 is shown.

Acquiring S1 data pertaining to a load by a detection arrangement 5 is performed. Subsequently, receiving S2 the acquired data by a processing unit 4 is performed. Data pertaining to a load may be acquired by one or more detection units 5A, 5B comprised in the detection arrangement. For example, an image sensor may acquire image data of the cargo space 3 and provide the image data to the processing unit 4. An image sensor may for example be a camera, or an IR sensor. Addidionally or alternatively, a detection unit 5A, 5B may be a weight sensor, wherein the weight sensor may acquire weight data of the load. Addidionally or alternatively, a detection unit 5A, 5B may be a tilt sensor, wherein the tilt sensor may acquire inclination data of at least one floor module 10. A tilt sensor may also be referred to as an inclinometer, as is established in the art. Addidionally or alternatively, a detection unit 5A, 5B may be a speed sensor, wherein the speed sensor may acquire speed data of the road vehicle 1. A speed sensor may, e.g., be any speed sensor which often is provided in a road vehicle. A speed sensor may cooperate with any other sensor in the road vehicle so as to acquire velocity data.

It is to be understood that acquiring S1 data pertaining to a load may comprise acquiring data pertaining to one or more loads. That is, the since the cargo space 2 may hold a plurality of loads, data may be acquired by the detection arrangement 5 for each one, or at least a subset of, the plurality of loads. Consequently, data pertaining to any one load of a plurality of loads may be received S2 by the processing unit 4.

Determining S3, by the processing unit 4, at least one characteristic of the load based on the acquired data is performed. A characteristic of the load may be any property, aspect or attribute of the load, such as dimension, shape, color, location, presence, speed, tilt, weight etc. Consequently, the determined characteristic is dependent on the data pertaining to the load. For example, the processing unit 4 may determine S3 a presence of a load in said cargo space 3. A presence of the load may include a location of the load. Additionally or alternatively, the processing unit 4 may determine S3 any one characteristic of: a color, a dimension, a weight and a tilt of a load.

Determining a tilt of the load may comprise determining, for at least one floor module 10, an angular deviation of the respective first plane P1 and/or second plane P2 in relation to a respective predetermined initial state of the first plane P1 and/or the second plane P2.

Selectively setting S4, by the processing unit, at least one floor module 10 of a plurality of floor modules 10 in the deactivated state or the activated state is performed. Selectively setting S4 may be performed due to for example user input and/or input from the detection arrangement 4. For example, selectively setting S4 may be performed as a consequence of any one determined characteristic of the load. For example, selectively setting S4 a floor module 10 may comprise selectively setting a floor module 10 closest to the location of the load in the deactivated state or the activated state. The floor module 10 which is closest to the location of the load may for example be the floor module 10, or one of the floor modules 10, on which the load is arranged.

It is to be understood that the processing unit 4 may selectively set any one floor module 10 of the plurality of floor modules 10 in the activated state or the deactivated state based on any one determined characteristic of the load. For example, the processing unit 4 may set a floor module in the deactivated state if a tilt of such floor module is above a predetermined threshold value. As another example, the processing unit may set a floor module 10 in the activated state if a presence of a load is detected on such floor module. That is, selectively setting at least one floor module 10 may further comprises: if the weight of the load is below a predetermined threshold value or if the angular deviation of the first plane P1 and/or the second plane P2 is below a predetermined threshold value, setting, by the processing unit 4, the at least one floor module 10 in the activated state.

Additionally, variations to the disclosed variants can be understood and effected by the skilled person in practicing the claimed disclosure, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A road vehicle comprising a floor system for handling loads in a cargo space of the road vehicle, the floor system comprising:
a plurality of floor modules arranged on an inner floor of the road vehicle, each floor module comprising a plurality of roll or ball transfer units, each roll or ball transfer unit comprising a rotatable body, each rotatable body defining a respective load contact interface, and wherein each floor module is configured to be set in a deactivated state and an activated state, wherein in the activated state, at least some of the respective load contact interfaces of the rotatable bodies are configured to engage with a load arranged on the floor module for facilitating displacement of the load;
a detection arrangement configured to acquire data pertaining to the load; and
a processing unit communicatively connected to each floor module of the plurality of floor modules and the detection arrangement, the processing unit being configured to:
receive the data pertaining to the load and determine at least one characteristic of the load based on said data; and
selectively set each floor module of the plurality of floor modules in the deactivated state or the activated state.

2. The road vehicle according to claim 1, wherein the detection arrangement comprises an image sensor configured to acquire image data of the cargo space and to provide the image data to the processing unit, wherein the processing unit is configured to determine a presence of a load in said cargo space.

3. The road vehicle according to claim 1 or 2, wherein the detection arrangement comprises at least one weight sensor, the at least one weight sensor being configured to acquire weight data of a load in said cargo space.

4. The road vehicle according to any one of the preceding claims, wherein the detection arrangement comprises at least one tilt sensor, wherein the at least one tilt sensor is configured to acquire inclination data of at least one floor module, and wherein the processing unit is configured to determine a tilt of the load.

5. The road vehicle according to any one of the preceding claims, wherein the detection arrangement comprises a speed sensor configured to acquire speed data of the road vehicle.

6. The road vehicle according to any one of the preceding claims, wherein each floor module of the plurality of floor modules have at least two neighboring floor modules.

7. The road vehicle according to claim 6, wherein the plurality of floor modules are arranged in an O-shaped pattern.

8. The road vehicle according to claim 6, wherein the inner floor comprises a first zone and a second zone, wherein the first zone is arranged adjacent a cargo door of the road vehicle, and wherein the plurality of floor modules are arranged in a pattern in which a floor module coverage in said first zone is lower than a floor module coverage in said second zone.

9. The road vehicle according to any one of the preceding claims, wherein for each floor module, the load contact interfaces are arranged in a first plane, and wherein each floor module further comprises:
a floor unit, wherein the floor unit forms a surface facing said cargo space of the road vehicle, the surface extending in a second plane; wherein the floor unit is provided with openings for allowing the plurality of roll or ball transfer units to be movable relative the floor unit between a first position corresponding to the deactivated state of the floor module and a second position corresponding to the activated state of the floor module, wherein in the first position, the first plane is arranged relative to the second plane such that the surface of the floor unit is configured to support a load arranged on the floor module, and wherein in the second position, the first plane is arranged relative to the second plane such that at least some of the respective load contact interfaces of the rotatable bodies are configured to engage with a load arranged on the floor module for facilitating displacement of the load.

10. A method for operating a floor system of a road vehicle according to any one of claims 1-9, the method comprising:
acquiring, by the detection arrangement, data pertaining to a load;
receiving, by the processing unit, the acquired data;
determining, by the processing unit, at least one characteristic of the load based on the acquired data; and
selectively setting, by the processing unit, at least one floor module of the plurality of floor modules in the deactivated state or the activated state.

11. The method according to claim 10, wherein the detection arrangement comprises an image sensor, and wherein:
acquiring data pertaining to a load further comprises acquiring, by the image sensor, image data of the load;
determining at least one characteristic of the load comprises determining a presence and/or location of the load in the cargo space of the vehicle based on said image data; and
selectively setting at least one floor module optionally comprises selectively setting a floor module closest to the location of the load in the deactivated state or the activated state.

12. The method according to claim 10 or 11, wherein the detection arrangement comprises at least one of weight sensor arranged in a respective one floor module of the plurality of floor modules, and wherein:
acquiring data pertaining to a load further comprises acquiring, by the at least one weight sensor, weight data of a load arranged on said one floor module; and
determining at least one characteristic of the load comprises determining a weight of the load arranged on said one floor module.

13. The method according to any one of claims 10 to 12, wherein the detection arrangement comprises at least one tilt sensor, and wherein:
acquiring data pertaining to a load further comprises acquiring, by the at least one tilt sensor, inclination data of at least one floor module; and
determining at least one characteristic of the load comprises determining a tilt of the load.

14. The method according to claim 13, wherein determining a tilt of the load comprises determining, for the at least one floor module, an angular deviation of the respective first plane and/or second plane in relation to a respective predetermined initial state of the first plane and/or the second plane.

15. The method according to claim 12 and 13 or 12 and 14, wherein selectively setting at least one floor module further comprises:
if the weight of the load is below a predetermined threshold value or if the angular deviation of the first plane and/or the second plane is below a predetermined threshold value, setting, by the processing unit, the at least one floor module in the activated state.
